# EUROPÄISCHE PATENTSCHRIFT

(11) **EP 3 253 646 B1**
(45) Veröffentlichungstag und Bekanntmachung des Hinweises auf die Patenterteilung: **06.03.2019**
(21) Anmeldenummer: 16700543.8
(22) Anmeldetag: 08.01.2016
(51) Int. Cl.: B62J 17/00, B62J 23/00, B62J 27/00

(54) **HANDSCHUTZVORRICHTUNG FÜR EIN FAHRZEUG**
HAND PROTECTION DEVICE FOR A VEHICLE
PROTÈGE-MAIN POUR VÉHICULE

(30) Priorität: 06.02.2015 DE 102015202096
(43) Veröffentlichungstag der Anmeldung: 13.12.2017
(73) Patentinhaber: Bayerische Motoren Werke Aktiengesellschaft, 80809 München (DE)
(72) Erfinder: HOFER, Gerhard, 80469 München (DE); DIEHL, Helmut, 82431 Kochel (DE)
(86) Internationale Anmeldenummer: PCT/EP2016/050260
(87) Internationale Veröffentlichungsnummer: WO 2016/124352

(56) Entgegenhaltungen:
- EP-A1- 2 384 960
- EP-A2- 1 852 341
- JP-U- S4 979 936
- JP-U- S58 180 785
- US-A1- 2012 234 129

## Beschreibung

Es wird eine Handschutzvorrichtung für ein Fahrzeug angegeben. Bei dem Fahrzeug kann es sich beispielsweise um ein Einspurfahrzeug, wie z.B. ein Motorrad, handeln.
Handschutzvorrichtungen werden üblicherweise in Form von starren Bügeln, die lediglich die Funktion des Handschutzes erfüllen, oder als Schalenelemente, die einer Komforterhöhung durch einen erhöhten Wind- bzw. Wetterschutz dienen, ausgeführt.
Die Druckschrift EP 1 852 341 A2 beschreibt einen Handschutz für ein Motorrad, der einen Arm und einen beweglich mit dem Arm verbundenen Schild aufweist. Mittels des beweglichen Schildes soll eine Beschädigung des Schildes bei einem Sturz des Motorrades verhindert werden.
In der Druckschrift US 2012/0234129 A1 ist eine Handschutzvorrichtung für ein Motorrad beschrieben, die ein mit einem Lenker starr verbundenes Hauptteil und ein mit dem Hauptteil beweglich verbundenes Armteil, an dem ein Schild befestigt ist, umfasst. Dadurch soll erreicht werden, dass ein Fahrer des Motorrads bei einem Sturz seine Hände nicht zwischen dem Lenker und dem Schild einklemmen kann.

Die Druckschrift EP 2 384 960 A1, auf der der Oberbegriff von Anspruch 1 basiert, beschreibt eine Schutzvorrichtung zum Anbringen an einer von einem Bediener zu betätigenden Handgriffeinrichtung, die zumindest einen die Handgriffeinrichtung überkragenden Schutzbügel aufweist. Der Schutzbügel ist beidseitig der Handgriffeinrichtung relativ zu dieser oder zu einem die Handgriffeinrichtung tragenden Lenker befestigt, wobei die Schutzvorrichtung öffnungsfähig ist und eine Auslöseeinrichtung aufweist, mittels der zumindest ein Teilabschnitt des Schutzbügels aus einem durch diesen versperrten Fluchtweg für die Hand des Bedieners den Fluchtweg freigebend wegbewegbar ist oder der Schutzbügel als Ganzes aus einer Solllage aus dem Fluchtweg wegschwenkbar ist.
Die Druckschrift JP S58 180785 U beschreibt eine Handschutzvorrichtung für ein Fahrzeug, die einen Schutzbügel, der starr mit einem Lenker des Fahrzeuges verbindbar ist, und ein beweglich zum Schutzbügel angeordnetes Erweiterungselement, das in einer ersten Position und mittels in Löcher eingreifenden Druckknöpfen in zumindest einer von der ersten Position verschiedenen zweiten Position fixiert werden kann, aufweist.
Nachteilig bei im Stand der Technik bekannten Handschutzvorrichtungen ist, dass sie entweder lediglich eine Schutzfunktion erfüllen, oder aber aufgrund einer Komfortfunktion sehr groß ausgeführt sind. Zudem kann es sein, dass eine Komfortfunktion im Sinne eines Wind- bzw. Wetterschutzes vom Fahrer nur bei bestimmten Wetter- bzw. Fahrtbedingungen, die sich z.B. auch während einer Fahrt ändern können, erwünscht ist.
Es ist eine zu lösende Aufgabe zumindest einiger Ausführungsformen, eine Handschutzvorrichtung für ein Fahrzeug anzugeben, die sowohl eine Schutzals auch eine Komfortfunktion aufweist, wobei zumindest die Komfortfunktion variabel vom Fahrer des Fahrzeuges eingestellt werden kann.
Diese Aufgabe wird durch einen Gegenstand gemäß dem unabhängigen Patentanspruch gelöst. Vorteilhafte Ausführungsformen und Weiterbildungen des Gegenstandes gehen weiterhin aus den abhängigen Patentansprüchen, der nachfolgenden Beschreibung und aus den Zeichnungen hervor.
Die hier beschriebene Handschutzvorrichtung für ein Fahrzeug weist gemäß einer Ausführungsform der Erfindung einen Schutzbügel auf, der starr mit einem Lenker des Fahrzeuges verbindbar ist.

Beispielsweise kann der Schutzbügel derart fest mit dem Lenker verbunden werden, dass seine Ausrichtung zum Lenker nicht oder zumindest nicht werkzeugfrei geändert werden kann. Der Schutzbügel kann entweder direkt mit dem Lenker verbindbar sein, oder auch indirekt über weitere Verbindungselemente wie Verbindungsstangen oder dergleichen. Vorzugsweise weist der Schutzbügel eine Bügelform mit einem ersten und einem zweiten Ende auf, wobei die beiden Enden jeweils direkt oder indirekt mit dem Lenker des Fahrzeuges verbindbar sind.
Weiterhin ist ein beweglich zum Schutzbügel angeordnetes Erweiterungselement vorgesehen, das hier und im Folgenden auch als Schutzbügelerweiterungselement, als erstes Erweiterungselement oder auch als erstes Schutzbügelerweiterungselement bezeichnet werden kann. Das Erweiterungselement kann erfindungsgemäß in einer ersten Position und in einer ersten Position verschiedenen zweiten Position fixiert werden. Vozugsweise ist das Erweiterungselement mit dem Schutzbügel drehbar gelagert verbunden. Vorzugsweise ist das Erweiterungselement an zwei Enden jeweils über ein Drehgelenk direkt mit dem Schutzbügel verbunden.

Gemäß einer weiteren bevorzugten Ausführungsform weist die Handschutzvorrichtung eine Anströmfläche auf. Die Anströmfläche der Handschutzvorrichtung kann dabei als diejenige Fläche der Handschutzvorrichtung verstanden werden, welche von einem Fahrtwind, der der Fahrtrichtung des Fahrzeugs, insbesondere der Vorwärtsfahrtrichtung des Fahrzeugs, entgegengesetzt ist, angeströmt wird. Vorzugsweise entspricht die Anströmfläche der Handschutzvorrichtung in der ersten Position des Erweiterungselements einer Anströmfläche des Schutzbügels. In der zweiten Position des Erweiterungselements ist die Anströmfläche der Handschutzvorrichtung im Vergleich zur ersten Position vorzugsweise vergrößert.

Vorteilhafterweise kann bei der hier beschriebenen Handschutzvorrichtung mittels des beweglich zum Schutzbügel angeordneten Erweiterungselements je nach Bedarf eine Belüftung der Hände durch den Fahrtwind bzw. ein Schutz der Hände vor dem Fahrtwind oder Regen vom Fahrer gewählt werden.

Gemäß einer bevorzugten Ausführungsform kann das Erweiterungselement in zumindest einer weiteren zweiten Position fixiert werden. Besonders bevorzugt kann das Erweiterungselement in einer Vielzahl von weiteren zweiten Positionen fixiert werden. Dabei sind der Schutzbügel und das Erweiterungselement vorzugsweise derart ausgebildet, dass zwischen dem Schutzbügel und dem Erweiterungselement in seiner jeweiligen Position kein Spalt vorhanden ist.
Beispielsweise kann das Erweiterungselement mittels eines Rastmechanismus fixiert werden. Alternativ oder zusätzlich ist es auch möglich, dass das Erweiterungselement mittels eines Anschlags fixiert werden kann. Vorzugsweise kann das Erweiterungselement werkzeuglos in die verschiedenen Positionen, d.h. von der ersten Position in die zumindest eine zweite Position, gebracht werden und werkzeüglos in der jeweiligen Position fixiert werden können. Mit anderen Worten benötigt ein Fahrer des Fahrzeugs kein Werkzeug, um das Erweiterungselement von einer Position in eine andere Position zu bringen und dort zu verriegeln.

Gemäß der Erfindung kann das Erweiterungselement in einer zweiten Position oberhalb des Schutzbügels und in einer weiteren zweiten Position unterhalb des Schutzbügels fixiert werden. Das heißt, dass das Erweiterungselement in zumindest zwei zweiten Positionen, in denen die Anströmfläche der Handschutzvorrichtung im Vergleich zur ersten Position vergrößert ist, fixiert werden kann, wobei das Erweiterungselement in einer zweiten Position über die eine Seite des Schutzbügels ragt und in der anderen zweiten Position über die andere Seite des Schutzbügels ragt.

Gemäß einer bevorzugten Ausführungsform weist die Handschutzvorrichtung ein zweites Erweiterungselement auf, das beweglich zum Schutzbügel angeordnet ist und zumindest in einer ersten Position und in einer von der ersten Position verschiedenen zweiten Position fixiert werden kann. Das zweite Erweiterungselement kann hier und im Folgenden auch als zweites Schutzbügelerweiterungselement bezeichnet werden. Vorzugsweise entspricht die Anströmfläche der Handschutzvorrichtung in der ersten Position des zweiten Erweiterungselements einer Anströmfläche des Schutzbügels. In der zweiten Position des zweiten Erweiterungselements ist die Anströmfläche der Handschutzvorrichtung hingegen im Vergleich zur ersten Position vergrößer.
Beispielsweise können das Erweiterungselement und das zweite Erweiterungselement jeweils in einer zweiten Position fixiert werden, so dass eine Anströmfläche der Handschutzvorrichtung aus einer Summe der Anströmflachen des Schutzbügels, des Erweiterungselements und des zweiten Erweiterungselements gebildet ist.
Es kann zum Beispiel möglich sein, dass das Erweiterungselement und das zweite Erweiterungselement jeweils in einer zweiten Position fixiert werden können, so dass das Erweiterungselement und das zweite Erweiterungselement auf zwei verschiedenen Seiten des Schutzbügels hervorragen.

Gemäß einer bevorzugten Ausführungsform können das Erweiterungselement und das zweite Erweiterungselement jeweils in einer zweiten Position fixiert werden, so dass das Erweiterungselement und das zweite Erweiterungselement auf derselben Seite des Schutzbügels hervorragen.
Weiterhin kann die hier beschriebene Handschutzvorrichtung neben dem Erweiterungselement bzw. neben dem ersten und zweiten Erweiterungselement ein oder mehrere weitere Erweiterungselemente aufweisen, die beispielsweise analog zu dem beschriebenen ersten bzw. zweiten Erweiterungselement ausgeführt sein können.

Des Weiteren wird ein Lenker für ein Fahrzeug angegeben. Der Lenker ist mit einer hier beschriebenen Handschutzvorrichtung verbunden. Die mit dem Lenker verbundene Handschutzvorrichtung kann somit eines oder mehrere Merkmale der bisher und/oder im Folgenden beschriebenen Handschutzvorrichtung aufweisen. Vorzugsweise ist der Schutzbügel der Handschutzvorrichtung starr mit dem Lenker des Fahrzeuges verbunden. Insbesondere kann der Schutzbügel derart fest mit dem Lenker verbunden sein, dass seine Ausrichtung zum Lenker entweder gar nicht oder zumindest nicht werkzeugfrei geändert werden kann. Der Schutzbügel kann entweder direkt mit dem Lenker verbunden sein, oder auch indirekt über weitere Verbindungselemente wie Verbindungsstangen oder dergleichen. Vorzugsweise weist der Schutzbügel eine Bügelform mit einem ersten und einem zweiten Ende auf, wobei die beiden Enden jeweils direkt oder indirekt fest mit dem Lenker des Fahrzeuges verbunden sind.
Weiterhin wird ein Fahrzeug angegeben, dass eine hier beschriebene Handschutzvorrichtung aufweist. Das Fahrzeug kann beispielsweise als Einspurfahrzeug, insbesondere als Motorrad, Motorroller oder Fahrrad, ausgebildet sein. Alternativ kann das Fahrzeug z.B. auch als sogenanntes Quad bzw. ATV ("All Terrain Vehicle", Geländefahrzeug) ausgebildet sein. Vorzugsweise weist das Fahrzeug zwei der hier beschriebenen Handschutzvorrichtungen auf, so dass ein Fahrer des Fahrzeugs beide den Lenker des Fahrzeugs greifenden Hände schützen kann.
Weitere Vorteile und vorteilhafte Ausführungsformen der hier beschriebenen Handschutzvorrichtung ergeben sich aus den im Folgenden in Verbindung mit den Figuren 1A bis 4B beschriebenen Ausführungsformen. Es zeigen:
- Figuren 1A und 1B: zwei Ansichten einer hier beschriebenen Handschutzvorrichtung mit einem Schutzbügel und einem Erweiterungselement in einer ersten Position gemäß einem Ausführungsbeispiel,
- Figuren 2A und 2B: zwei Ansichten der Handschutzvorrichtung aus den Figuren 1A und 1B mit dem Erweiterungselement in einer zweiten Position,
- Figuren 3A und 3B: zwei Ansichten einer hier beschriebenen Handschutzvorrichtung mit einem Schutzbügel, einem ersten und einem zweiten Erweiterungselement in einer zweiten Position gemäß einem weiteren Ausführungsbeispiel, und
- Figuren 4A und 4B: zwei Ansichten der Handschutzvorrichtung aus den Figuren 3A und 3B mit dem zweiten Erweiterungselement in einer weiteren zweiten Position.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

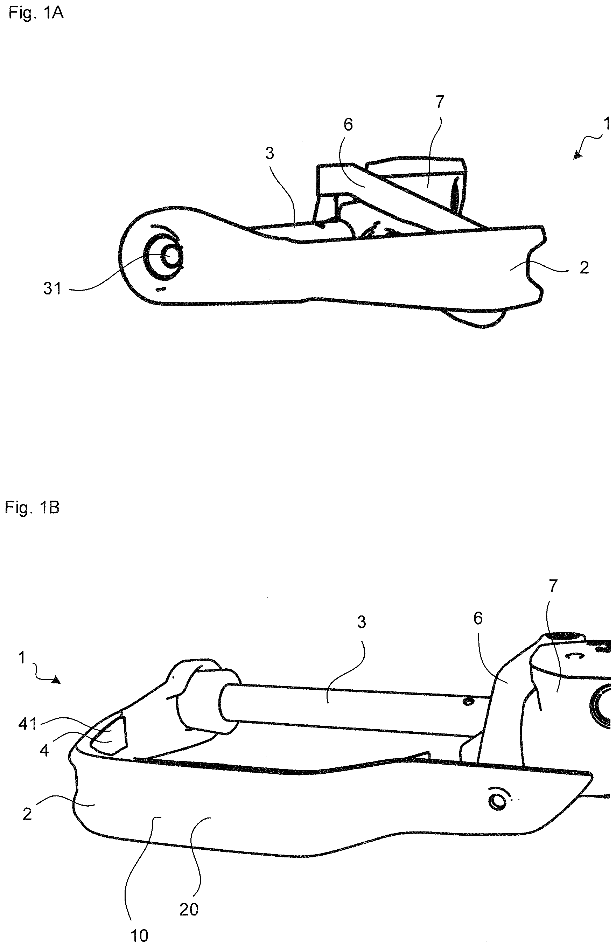

Die Figuren 1A und 1B zeigen eine Handschutzvorrichtung 1 für ein Fahrzeug gemäß einem ersten Ausführungsbeispiel. Die Handschutzvorrichtung 1 weist einen Schutzbügel 2 auf, der starr mit einem Lenker 3 des Fahrzeuges verbunden ist. Der Schutzbügel 2 weist insbesondere ein erstes Ende auf, welches mit dem Lenker 3 im Bereich eines Lenkergewichts 31 des Lenkers 3 direkt verbunden ist. Weiterhin weist der Schutzbügel 2 ein zweites Ende auf, das über eine Verbindungsstange 6 mit einer Handarmatur 7, die am Lenker 3 befestigt ist, verbunden ist. Alternativ können auch beide Enden des Schutzbügels 2 direkt mit dem Lenker 3 verbunden sein.

Weiterhin weist die Handschutzvorrichtung 1 ein beweglich zum Schutzbügel 2 angeordnetes Erweiterungselement 4 auf. Das Erweiterungselement 4 kann in zumindest zwei Positionen fixiert werden. In den Figuren 1A und 1B ist das Erweiterungselement 4 in einer ersten Position 41 fixiert, in welcher das Erweiterungselement 4 in einer Ansicht aus Richtung des bei der Fahrt des Fahrzeuges entgegenkommenden Fahrtwindes vom Schutzbügel verdeckt ist. Die Handschutzvorrichtung 1 weist eine Anströmfläche 10 auf, die bei der Fahrt des Fahrzeuges vom entgegen strömenden Fahrtwind angeströmt wird, und die in der in den Figuren 1A und 1B dargestellten ersten Position 41 des Erweiterungselements 4 der Anströmfläche 20 des Schutzbügels 2 entspricht, da ja der Schutzbügel 2 das Erweiterungselement 4 in seiner ersten Position 41 aus Richtung des Fahrtwindes verdeckt.

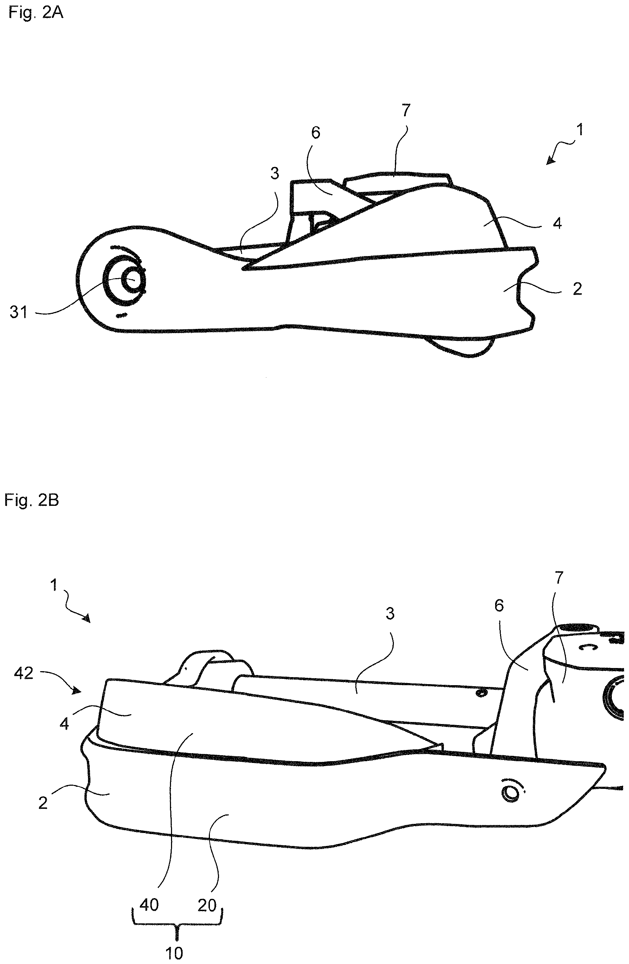

In den Figuren 2A und 2B ist das Erweiterungselement 4 in einer zweiten Position 42 fixiert, in welcher die Anströmfläche 10 der Handschutzvorrichtung 1 im Vergleich zu der in den Figuren 1A und 1B gezeigten ersten Position 41 des Erweiterungselements 4 vergrößert ist. Alternativ zu der in den Figuren 2A und 2B dargestellten zweiten Position 42 des Erweiterungselements 4 kann das Erweiterungselement 4 auch in verschiedenen weiteren zweiten Positionen fixiert werden. Beispielsweise kann das Erweiterungselement 4 in verschiedenen zweiten Positionen oberhalb des Schutzbügels 2 und/oder in einer oder mehreren verschiedenen zweiten Positionen unterhalb des Schutzbügels 2 fixiert werden, wobei jedoch in jeder zweiten Position des Erweiterungselements 4 die Anströmfläche 10 der Handschutzvorrichtung 1 im Vergleich zur ersten Position 41 des Erweiterungselements 4 vergrößert ist. Dadurch kann vorteilhafterweise je nach Bedarf und beispielsweise in Abhängigkeit von Fahrt- und/oder Wettereigenschaften die Schutz- und Komfortfunktion der Handschutzvorrichtung 1 variabel vom Fahrer eingestellt werden. Vorzugsweise sind der Schutzbügel 2 und das Erweiterungselement 4 derart ausgebildet, dass unabhängig davon, welche zweite Position des Erweiterungselements 4 gewählt wird, kein Spalt zwischen dem Schutzbügel 2 und dem Erweiterungselement 4 vorhanden ist.

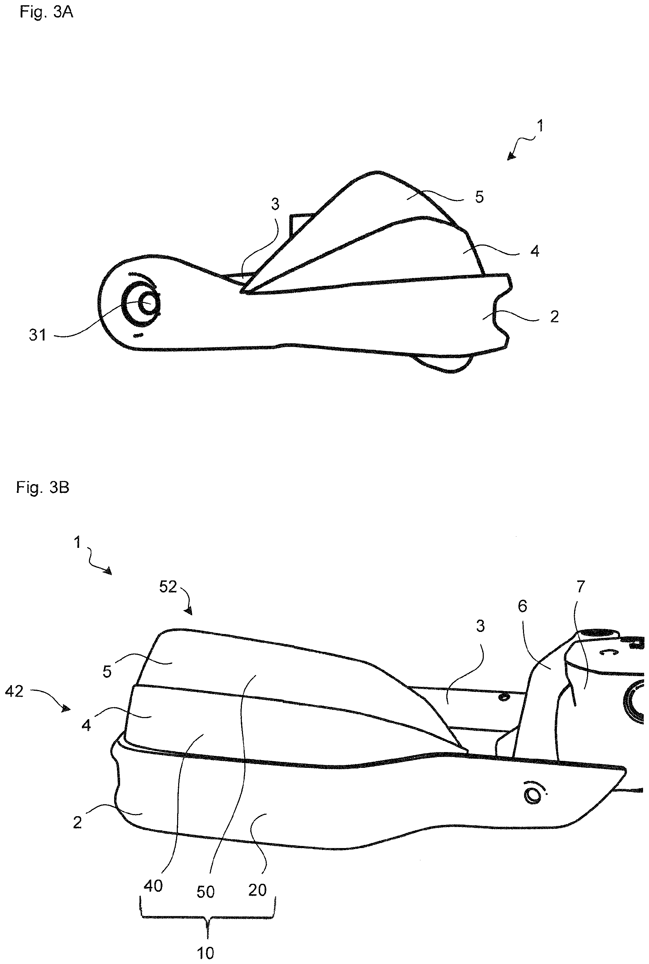

Bei der Handschutzvorrichtung 1 gemäß dem Ausführungsbeispiel nach den Figuren 3A und 3B weist die Handschutzvorrichtung 1 weiterhin ein zweites Erweiterungselement 5 auf, das ebenfalls wie das erste Erweiterungselement 4 beweglich zum Schutzbügel 2 angeordnet ist. Außerdem kann das zweite Erweiterungselement 5 ebenfalls in einer ersten Position und in zumindest einer von der ersten Position verschiedenen zweiten Position 52 fixiert werden kann. In den Figuren 3A und 3B ist das das zweite Erweiterungselement 5 in einer zweiten Position 52 fixiert, in der die Gesamtanströmfläche 10 der Handschutzvorrichtung 1 durch das ausgeklappte erste und zweite Erweiterungselement 4, 5 vergrößert ist.

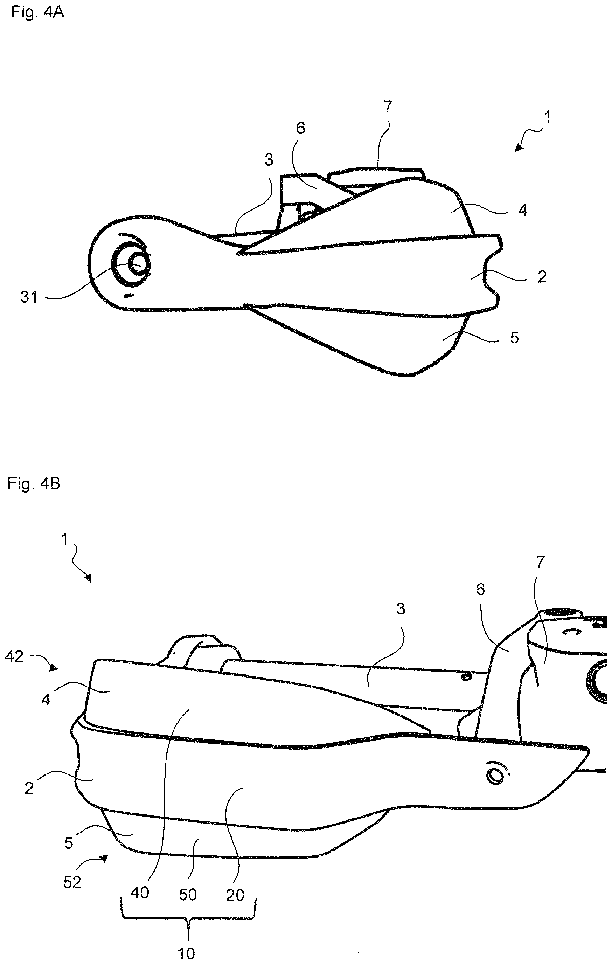

Dir Figuren 4A und 4B zeigen die Handschutzvorrichtung 1 aus den Figuren 3A und 3B gemäß einer weiteren Variante, in der das zweite Erweiterungselement 5 in einer weiteren zweiten Position 52 fixiert ist. Vorzugsweise können die verschiedenen Positionen des ersten und/oder zweiten Erweiterungselements 4, 5 vom Fahrer des Fahrzeugs werkzeuglos eingestellt werden.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Handschutzvorrichtung
- 10: Anströmfläche der Handschutzvorrichtung
- 2: Schutzbügel
- 20: Anströmfläche des Schutzbügels
- 3: Lenker
- 31: Lenkergewicht
- 4: Erweiterungselement
- 40: Anströmfläche des Erweiterungselements
- 41: erste Position des Erweiterungselements
- 42: zweite Position des Erweiterungselements
- 5: zweites Erweiterungselement
- 50: Anströmfläche des zweiten Erweiterungselements
- 52: zweite Position des zweiten Erweiterungselements
- 6: Verbindungsstange
- 7: Handarmatur

## Patentansprüche

1. Handschutzvorrichtung (1) für ein Fahrzeug, aufweisend
- einen Schutzbügel (2), der starr mit einem Lenker (3) des Fahrzeuges verbindbar ist,
- ein beweglich zum Schutzbügel (2) angeordnetes Erweiterungselement (4), das in einer ersten Position (41) und in zumindest einer von der ersten Position (41) verschiedenen zweiten Position (42) fixiert werden kann,
**dadurch gekennzeichnet, dass**
- das Erweiterungselement (4) in einer zweiten Position oberhalb des Schutzbügels (2) und in einer weiteren zweiten Position unterhalb des Schutzbügels (2) fixiert werden kann.

2. Handschutzvorrichtung nach Anspruch 1, wobei das Erweiterungselement (4) mit dem Schutzbügel (2) drehbar gelagert verbunden ist.

3. Handschutzvorrichtung nach einem der vorhergehenden Ansprüche, wobei die Handschutzvorrichtung (1) eine Anströmfläche (10) aufweist, die in der ersten Position (41) des Erweiterungselements (4) einer Anströmfläche (20) des Schutzbügels (2) entspricht, und wobei die Anströmfläche (10) der Handschutzvorrichtung in der zweiten Position (42) des Erweiterungselements (4) vergrößert ist.

4. Handschutzvorrichtung nach einem der vorhergehenden Ansprüche, wobei das Erweiterungselement (4) in zumindest einer weiteren zweiten Position (42) fixiert werden kann.

5. Handschutzvorrichtung nach einem der vorhergehenden Ansprüche, wobei das Erweiterungselement (4) mittels eines Rastmechanismus oder mittels eines Anschlags fixiert werden kann.

6. Handschutzvorrichtung nach einem der vorhergehenden Ansprüche, aufweisend ein zweites Erweiterungselement (5), das beweglich zum Schutzbügel (2) angeordnet ist und zumindest in einer ersten Position und in einer von der ersten Position verschiedenen zweiten Position (52) fixiert werden kann.

7. Handschutzvorrichtung nach Anspruch 6, wobei die Anströmfläche (10) der Handschutzvorrichtung (1) in der ersten Position des zweiten Erweiterungselements (5) einer Anströmfläche (20) des Schutzbügels (2) entspricht, und wobei die Anströmfläche (10) der Handschutzvorrichtung (1) in der zweiten Position (52) des zweiten Erweiterungselements (5) vergrößert ist.

8. Handschutzvorrichtung nach einem der Ansprüche 6 oder 7, wobei das Erweiterungselement (4) und das zweite Erweiterungselement (5) jeweils in einer zweiten Position (42, 52) fixiert werden können, so dass eine Anströmfläche (10) der Handschutzvorrichtung (1) aus einer Summe der Anströmflachen (20, 40, 50) des Schutzbügels (2), des Erweiterungselements (4) und des zweiten Erweiterungselements (5) gebildet ist.

9. Handschutzvorrichtung nach einem der Ansprüche 6 bis 8, wobei das Erweiterungselement (4) und das zweite Erweiterungselement (5) jeweils in einer zweiten Position (42, 52) fixiert werden können, so dass das Erweiterungselement (4) und das zweite Erweiterungselement (5) auf zwei verschiedenen Seiten des Schutzbügels (2) hervorragen.

10. Handschutzvorrichtung nach einem der Ansprüche 6 bis 9, wobei das Erweiterungselement (4) und das zweite Erweiterungselement (5) jeweils in einer zweiten Position (42, 52) fixiert werden können, so dass das Erweiterungselement (4) und das zweite Erweiterungselement (5) auf derselben Seite des Schutzbügels (2) hervorragen.

11. Handschutzvorrichtung nach einem der Ansprüche 6 bis 10, aufweisend ein oder mehr weitere Erweiterungselemente.

12. Handschutzvorrichtung nach einem der vorhergehenden Ansprüche, wobei das bzw. die Erweiterungselemente (4, 5) werkzeuglos in die verschiedenen Positionen gebracht und fixiert werden können.

13. Lenker (3) für ein Fahrzeug mit einer Handschutzvorrichtung (1) gemäß einem der vorhergehenden Ansprüche, wobei der Schutzbügel (2) der Handschutzvorrichtung (1) starr mit dem Lenker (3) verbunden ist.

14. Fahrzeug aufweisend eine Handschutzvorrichtung (1) gemäß einem der vorhergehenden Ansprüche, wobei das Fahrzeug insbesondere als Motorrad oder Motorroller ausgebildet ist.

## Claims

1. A hand protection device (1) for a vehicle, having
- a protective guard (2) which can be connected rigidly to a handlebar (3) of the vehicle,
- an extension element (4) which is arranged to be movable relative to the protective guard (2), which element can be fixed in a first position (41) and in at least one second position (42) different from the first position (41),
**characterised in that**
- the extension element (4) can be fixed in a second position above the protective guard (2) and in a further second position below the protective guard (2).

2. A hand protection device according to Claim 1, wherein the extension element (4) is connected rotatably mounted to the protective guard (2).

3. A hand protection device according to one of the preceding claims, wherein the hand protection device (1) has a flow-facing surface (10) which in the first position (41) of the extension element (4) corresponds to a flow-facing surface (20) of the protective guard (2), and wherein the flow-facing surface (10) of the hand protection device is enlarged in the second position (42) of the extension element (4).

4. A hand protection device according to one of the preceding claims, wherein the extension element (4) can be fixed in at least one further second position (42).

5. A hand protection device according to one of the preceding claims, wherein the extension element (4) can be fixed by means of a latching mechanism or by means of a stop.

6. A hand protection device according to one of the preceding claims, having a second extension element (5) which is arranged to be movable relative to the protective guard (2) and can be fixed at least in a first position and in a second position (52) different from the first position.

7. A hand protection device according to Claim 6, wherein the flow-facing surface (10) of the hand protection device (1) in the first position of the second extension element (5) corresponds to a flow-facing surface (20) of the protective guard (2), and wherein the flow-facing surface (10) of the hand protection device (1) is enlarged in the second position (52) of the second extension element (5).

8. A hand protection device according to one of Claims 6 or 7, wherein the extension element (4) and the second extension element (5) can each be fixed in a second position (42, 52), so that a flow-facing surface (10) of the hand protection device (1) is formed from a total of the flow-facing surfaces (20, 40, 50) of the protective guard (2), of the extension element (4) and of the second extension element (5).

9. A hand protection device according to one of Claims 6 to 8, wherein the extension element (4) and the second extension element (5) can each be fixed in a second position (42, 52), so that the extension element (4) and the second extension element (5) protrude on two different sides of the protective guard (2).

10. A hand protection device according to one of Claims 6 to 9, wherein the extension element (4) and the second extension element (5) can each be fixed in a second position (42, 52), so that the extension element (4) and the second extension element (5) protrude on the same side of the protective guard (2).

11. A hand protection device according to one of Claims 6 to 10, having one or more further extension elements.

12. A hand protection device according to one of the preceding claims, wherein the extension element or elements (4, 5) can be brought into and fixed in the different positions without a tool.

13. A handlebar (3) for a vehicle having a hand protection device (1) according to one of the preceding claims, wherein the protective guard (2) of the hand protection device (1) is connected rigidly to the handlebar (3).

14. A vehicle having a hand protection device (1) according to one of the preceding claims, wherein the vehicle is in the form especially of a motorcycle or motor scooter.

## Revendications

1. Protège-main (1) destiné à un véhicule comprenant :
- un étrier de protection (2) qui peut être relié solidairement au guidon (3) du véhicule,
- un élément d'extension (4) monté mobile par rapport à l'étrier de protection (2) et qui peut être fixé dans une première position (41) et dans au moins une seconde position (42) différente de la première position (41),
**caractérisé en ce que**
l'élément d'extension (4) peut être fixé au-dessus de l'étrier de protection (2) dans une seconde position et au-dessous de cet étrier de protection (2) dans une autre seconde position.

2. Protège-main conforme à la revendication 1,
dans lequel l'élément d'extension (4) est relié à l'étrier de protection (2) en étant monté mobile en rotation sur celui-ci.

3. Protège-main (1) conforme à l'une des revendications précédentes, comportant une surface d'écoulement (10) qui correspond, dans la première position (41) de l'élément d'extension (4) à une surface d'écoulement (20) de l'étrier de protection (2), la surface d'arrivée d'écoulement (10) du protège-main étant augmentée dans la seconde position (42) de l'élément d'extension (4).

4. Protège-main conforme à l'une des revendications précédentes,
dans lequel l'élément d'extension (4) peut être fixé dans au moins une autre seconde position (42).

5. Dispositif conforme à l'une des revendications précédentes,
dans lequel l'élément d'extension (4) peut être fixé au moyen d'un mécanisme d'encliquetage ou au moyen d'une butée.

6. Protège-main conforme à l'une des revendications précédentes, comportant un second élément d'extension (5) qui est monté mobile par rapport à l'étrier de protection (2), et peut être fixé au moins dans une première position et dans une seconde position (52) différente de la première position.

7. Protège-main conforme à la revendication 6,
dans lequel la surface d'écoulement (10) du protège-main (1) correspond, dans la première position du second élément d'extension (5) à une surface d'écoulement (20) de l'étrier de protection (2), et, dans la seconde position (52) du second élément d'extension (5), la surface d'écoulement (10) du protège-main (1) est augmentée.

8. Protège-main conforme à l'une des revendications 6 et 7,
dans lequel l'élément d'extension (4) et le second élément d'extension (5) peuvent respectivement être fixés dans une seconde position (42, 52) de sorte que la surface d'écoulement (10) du protège-main (1) soit formée par la somme des surfaces d'écoulement (20, 40, 50) de l'étrier de protection (2), de l'élément d'extension (4) et du second élément d'extension (5).

9. Protège-main conforme à l'une des revendications 6 à 8,
dans lequel l'élément d'extension (4) et le second élément d'extension (5) peuvent respectivement être fixés dans une seconde position (42, 52) de sorte que l'élément d'extension (4) et le second élément d'extension (5) dépassent sur deux côtés différents de l'étrier de protection (2).

10. Protège-main conforme à l'une des revendications 6 à 9,
dans lequel l'élément d'extension (4) et le second élément d'extension (5) peuvent respectivement être fixés dans une seconde position (42, 52) de sorte que l'élément d'extension (4) et le second élément d'extension (5) dépassent sur le même côté de l'étrier de protection (2).

11. Protège-main conforme à l'une des revendications 6 à 10,
comprenant un ou plusieurs autres éléments d'extension.

12. Protège-main conforme à l'une des revendications précédentes, dans lequel le ou les élément(s) d'extension (4, 5) peut(peuvent) être monté(s) et fixé(s) sans outil dans les différentes positions.

13. Guidon (3) destiné à un véhicule ayant un protège-main (1) conforme à l'une des revendications précédentes, dans lequel l'étrier de protection (2) du protège-main (1) est relié solidairement au guidon (3).

14. Véhicule comprenant un protège-main (1) conforme à l'une des revendications précédentes, en particulier réalisé sous la forme d'une moto ou d'un scooter.
